# FASCICULE DE BREVET EUROPEEN

(11) **EP 3 201 713 B1**
(45) Date de publication et mention de la délivrance du brevet: **20.03.2019**
(21) Numéro de dépôt: 15753641.8
(22) Date de dépôt: 05.08.2015
(51) Int. Cl.: G05G 9/047, G05G 1/08, G05G 21/00

(54) **DISPOSITIF DE COMMANDES À MOLETTE**
STEUERUNGSVORRICHTUNG MIT KNAUF
CONTROL DEVICE WITH KNOB

(30) Priorité: 30.09.2014 FR 1459323
(43) Date de publication de la demande: 09.08.2017
(73) Titulaire: Aptiv Technologies Limited, St. Michael (BB)
(72) Inventeur: MICHEL, Johann, 67100 Strasbourg (FR); ISQUIERDO, Vincent, 67100 Strasbourg (FR); AUFRERE, Etienne, 67118 Geispolsheim (FR); JANTET, Nicolas, 67000 Strasbourg (FR)
(74) Mandataire: Robert, Vincent
(86) Numéro de dépôt international: PCT/EP2015/068076
(87) Numéro de publication internationale: WO 2016/050394

(56) Documents cités:
- EP-A1- 0 056 315
- EP-A2- 0 855 668
- WO-A1-02/089047
- US-A1- 2009 115 748

## Description

### DOMAINE TECHNIQUE

L'invention concerne un dispositif de commandes à molette déplaçable, comme connu de EP 0 855 668 A, utilisé dans les automobiles en tant qu'interface digitale de commande.

### ARRIERE-PLAN TECHNOLOGIQUE DE L'INVENTION

La multiplicité des commandes auxquelles a accès le conducteur d'un véhicule moderne est tel que de nombreuses interfaces sont développées permettant d'activer des fonctions sans avoir à regarder la commande ou ses mains. L'utilisateur ne se fie qu'au ressenti digital pour commander une fonction et peut ainsi rester concentré et garder les yeux sur la route. La commande de nombreuses fonctions, notamment le système de navigation, la radio, le téléphone et l'ensemble des fonctions télématiques, ainsi que le contrôle de la ventilation et de l'air conditionné, est réalisée au travers d'un écran de contrôle et d'une interface déportée. Les interfaces de navigation le plus récemment développées sont des molettes directionnelles placées sur la console centrale entre les passagers avant du véhicule.

A la différence des manettes et joystick de jeux vidéo, les déplacements des molettes directionnelles pour véhicules ont de très petites amplitudes limitées à quelques millimètres voire moins. Les déplacements doivent être sûrs et précis de sorte que l'utilisateur concentré sur la conduite sélectionne et valide facilement et sans erreur la fonction qu'il recherche. Pour une utilisation plus précise et plus agréable, un moyen de rappel sollicite en permanence la molette vers une position neutre, généralement centrale. Les déplacements avant-arrière et droite-gauche de la molette demandent donc un léger et agréable effort nécessaire pour vaincre le rappel. La rotation de la molette est quant à elle accompagnée d'un petit effort cyclique ressenti par l'utilisateur. Ces molettes sont réalisées sans jeu de fonctionnement perceptible ce qui serait très désagréable.

Afin d'obtenir un parfait équilibre entre la performance et l'apparence des molettes directionnelles pour véhicules, de nombreuses solutions complexes ont été mises en oeuvre. De nombreuses pièces mécaniques assemblées entre elles sont nécessaires afin de permettre à la molette directionnelle de pouvoir être sollicitée en rotation, en déplacement avant-arrière, droite-gauche, et également en appui. Les contraintes de temps d'assemblage et de coût ne permettent plus aujourd'hui de rester compétitif avec les solutions existantes.

Il est donc important de proposer une solution nouvelle résolvant ces problèmes.

### RESUME DE L'INVENTION

La présente invention vise à remédier aux inconvénients des solutions existantes en proposant un dispositif de commande pour lequel le nombre de pièces assemblées est fortement réduit au regard de l'état de l'art.

Un dispositif de commande destiné au choix et à la sélection de fonctions dans un véhicule par un utilisateur comprend une molette manipulable en rotation autour d'un axe principal par rapport à un support fixe. La molette comprend une position neutre dans laquelle l'axe principal est confondu avec un axe neutre fixe par rapport au support. Le dispositif de commande comprend également une plaque à circuit imprimé sur laquelle la molette et au moins un capteur de direction sont fixés, la plaque à circuit imprimé étant montée pivotante par rapport au support autour d'un axe globalement transversal à l'axe neutre de manière à venir occuper au moins une première position activée dans laquelle l'axe principal est incliné par rapport à l'axe neutre lorsque la molette est déplacée selon une direction orthogonale à l'axe neutre. Le capteur de direction est prévu pour détecter la position activée (PA).

La plaque à circuit imprimé peut comporter plusieurs capteurs de direction qui sont agencés autour de l'axe principal de manière à permettre la détection de plusieurs positions activées distinctes autour de l'axe neutre (N).

Il peut être prévu au moins un capteur de direction sur chaque face de la plaque à circuit imprimé.

Le premier capteur de direction peut comporter un élément de détection de contact coopérant avec une surface d'appui du dispositif de commande placé en vis-à-vis du capteur, le capteur s'actionnant lors de la butée dudit élément de détection de contact avec la surface d'appui du dispositif de commande lors du pivotement de la molette en position activée.

Au moins un capteur de direction peut comporter un élément de rappel élastique qui sollicite la molette vers sa position neutre depuis la position activée associée.

L'élément de détection de contact peut être du type résistif ou du type capacitif.

L'élément de détection de contact peut également être un bouton poussoir fixé sur le circuit imprimé.

Le circuit imprimé peut être agencé dans un boîtier dont une paroi interne forme la surface d'appui du dispositif de commande. Le boîtier peut comprendre une ouverture traversée par la molette fixée sur la plaque du circuit imprimé. Le boîtier peut également comprendre une membrane souple comblant la dite ouverture. La molette peut comprendre un capot d'habillage venant en appui sur la membrane, ladite membrane ayant des propriétés élastiques sollicitant la molette vers sa position neutre depuis la position activée associée.

La plaque à circuit imprimé peut être montée pivotante par une liaison de type rotule qui est agencée entre la plaque à circuit imprimé et le support. La liaison du type rotule peut comporter un premier élément de liaison qui est fixé sur la plaque à circuit imprimé et un second élément de liaison qui est fixé sur le support.

Le support peut comporter un socle. Le socle peut comporter une protubérance sur sa face supérieure formant une surface d'appui associée à au moins un capteur de direction, et le second élément de liaison réalisé venu de matière avec la face supérieure du socle.

La plaque à circuit imprimé peut être maintenue bloquée en rotation autour de l'axe principal par un plot de maintien agencés sur le support et traversant la plaque à circuit imprimé.

### DESCRIPTION DES FIGURES

D'autres caractéristiques, buts et avantages de l'invention apparaîtront à la lecture de la description détaillée qui va suivre, et en regard des dessins annexés, donnés à titre d'exemple non limitatif et sur lesquels
La Figure 1 est un schéma général indiquant les déplacements possibles de la molette d'un dispositif de commandes selon l'invention.
La Figure 2 est une vue éclatée du dispositif de commande selon l'invention.
La Figure 3 illustre une coupe longitudinale partielle du dispositif de commande en position neutre selon l'invention.
La figure 4 illustre une coupe longitudinale partielle du dispositif de commande en position activée selon l'invention.
La figure 5 est une vue ouverte du dispositif de commande illustrant un circuit imprimé du dispositif selon une alternative de l'invention.
La figure 6 est une vue ouverte du dispositif de commande illustrant un circuit imprimé du dispositif selon une autre alternative de l'invention.

### DESCRIPTION DES MODES DE REALISATION PRÉFÉRÉS

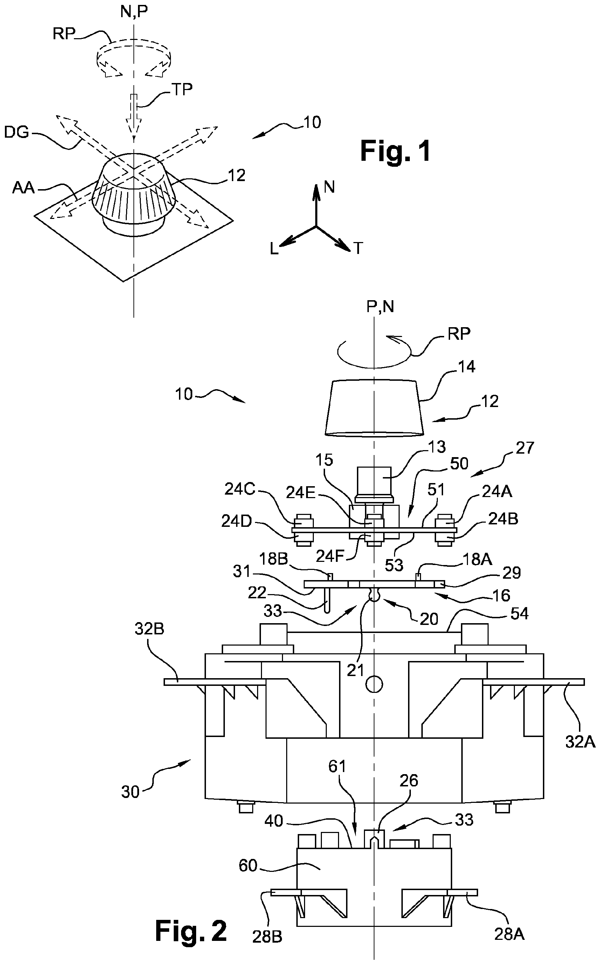

Selon la Figure 1, l'invention décrite est un dispositif 10 de commande destiné à choisir et sélectionner des fonctions dans un véhicule, ces opérations se faisant en manipulant une molette 12 déplaçable dans un repère orthogonal tri-axe direct, un premier axe transversal L, un deuxième axe transversal T orthogonal au premier axe transversal L, et un axe neutre longitudinal N. Lorsque la molette 12 s'étend selon un axe principal P qui peut être confondu avec l'axe neutre N, la molette 12 est dite en position neutre PN. La molette 12 est dite en position activée PA lorsque l'axe principal P est déplacé selon au moins une direction orthogonale AA à l'axe neutre N, l'axe principal P étant incliné par rapport à l'axe neutre N.

Dans un souci de clarté et de simplification de la lecture, une orientation de « bas » en « haut » telle que selon l'axe neutre N des figures pourra être utilisée, la molette 12 se trouvant en haut du dispositif 10. Egalement, les directions « avant-arrière » et « droite-gauche » pourront respectivement désigner les directions selon le premier axe transversal L et le deuxième axe transversal T. Ainsi, les termes « haut », « bas », « dessus », « dessous », « supérieur », « inférieur », « droite », « gauche », « avant », « arrière » ainsi que « horizontal » et « vertical » pourront servir la description sans pour autant limiter la portée de l'invention notamment par rapport aux nombreuses installations possibles du dispositif dans le véhicule.

La molette 12 dispose de quatre degrés de liberté qui sont un déplacement transversal dit droite-gauche, DG, correspondant à un pivotement autour du premier axe transversal L, un autre déplacement transversal dit avant-arrière, AA, correspondant à un pivotement autour du deuxième axe transversal T, une rotation principale RP de la molette 12 autour de l'axe principal P, et une translation TP selon l'axe principal P correspondant à un appui déplaçant verticalement la molette 12. Les déplacements avant-arrière AA et droite-gauche DG sont de très petites amplitudes aussi, bien que correspondants réellement à des pivotements, ces déplacements peuvent être perçus comme de petites translations. De même, le déplacement vertical TP est de très petite amplitude, équivalent à l'enfoncement d'une touche de clavier d'ordinateur. Seule la rotation principale RP peut être de grande amplitude, voire peut ne pas être limitée, la molette 12 pouvant indéfiniment tourner autour de l'axe principal P.

Dans le dispositif de commande 10 décrit, la molette 12 dispose des quatre degrés de liberté ci-dessus présentés. Cependant l'invention peut également s'appliquer à des dispositifs ne comprenant pas toutes ces possibilités, notamment ne disposant pas de la translation par appui, la validation d'une fonction se faisant par exemple par appui sur un bouton séparé, ou bien ne disposant que d'un déplacement transversal. L'invention peut également s'appliquer à des dispositifs comprenant d'autres possibilités de déplacement autour d'autres axes transversaux, notamment autour de deux autres axes transversaux perpendiculaires entre eux et en décalage angulaire, par exemple de quarante-cinq degrés, avec le premier axe transversal L et le deuxième axe transversal T.

La figure 2 décrit le dispositif de commande 10 en vue éclatée de façon à illustrer les pièces principales du dispositif de commande 10.

Le dispositif de commande 10 comprend notamment un capot d'habillage 14 de la molette 12, un module de détection de position 27 de la molette 12, une plaque de maintien 16, un support 60 et un boîtier 30 du dispositif de commande 10.

Le module de détection de position 27 de la molette 12 comprend une plaque de circuit imprimé 50, un organe rotatif 13 de forme globalement cylindrique qui est agencé à l'extrémité libre supérieure de l'arbre d'un encodeur rotatif 15 et 8 capteurs de direction dont 6 24A, 24B, 24C, 24D, 24E, 24F sont illustrés sur la figure 2. Le capot d'habillage 14 se fixe solidairement sur l'organe rotatif 13. L'ensemble représente la molette 12 du dispositif de commande 10.

La plaque à circuit imprimé 50 a une forme substantiellement circulaire. La plaque à circuit imprimé 50 est substantiellement orthogonale à l'axe principale P. La plaque à circuit imprimé 50 est de type double face. L'encodeur rotatif 15 est monté et connecté sur la face supérieure 51 de la plaque à circuit imprimé 50. Les capteurs de direction 24A, 24B, 24C, 24D, 24E, 24F sont agencés en zone distale de la plaque à circuit imprimé 50.

Les capteurs de direction 24A, 24B, 24C, 24D, 24E, 24F sont agencés par paire. Chaque capteur 24A d'une paire est placé aligné longitudinalement avec le capteur 24B associé de sorte qu'un capteur 24A d'une paire est localisé sur la face supérieure 51 de la plaque à circuit imprimé 50 tandis que le capteur 24B associé de la même paire est localisé sur la face inférieure 53 de la plaque à circuit imprimé 50. Chaque paire de capteur de direction 24 C, 24D est placée à une distance angulaire de 90 degrés d'une autre paire de capteur de direction 24E, 24F.

La plaque de maintien 16 est prévue pour supporter le module de détection de position 27. La plaque de maintien 16 comprend un premier plot de maintien 18A et un deuxième plot de maintien 18B sur sa face de dessus 29. Le premier plot 18A et le deuxième plot 18B viennent s'introduire respectivement dans une première ouverture et une deuxième ouverture, non représentées, de la plaque à circuit imprimé 50. Ces deux plots 18A, 18B permettent de maintenir la plaque à circuit imprimé 50 solidairement à la plaque de maintien 16 lors d'une rotation principale RP de la molette 12.

La plaque de maintien 16 comporte également une tige verticale 22 sur sa face inférieure 31, distante du centre de la plaque de maintien 16, orientée vers le bas. La tige verticale 22 s'insère dans le support 60 de la plaque de maintien 16 de sorte à maintenir la plaque de maintien fixe lors d'une rotation principale RP de la molette 12.

La plaque de maintien 16 comprend également sur sa face inférieure 31 un premier élément 20 d'une liaison du type rotule 33 comprenant une rotule 21. La rotule 21 est de forme substantiellement sphérique. La rotule 21 est agencée au centre de la plaque de maintien 16 et dans l'alignement longitudinal de la molette 12.

Le support 60 est prévu pour recevoir la plaque de maintien 16. Le support 60 comprend deux moyens de fixations 28A, 28B, agencées sur sa périphérie. Ces moyens 28A, 28 B, peuvent être des pattes de fixation, des oreilles de fixation ou tout autre moyen permettant de fixer le support 60 de la plaque de maintien 16 sur le boitier 30. Le support 60 de la plaque de maintien comprend également un socle 61 prévu pour maintenir la plaque de maintien 16.

Le socle 61 comprend au centre de sa surface radiale 40 supérieure un second élément 26 de la liaison 20 de type rotule 33 formant la contrepartie du premier élément 20 de liaison de type rotule 33. Le second élément 26 de la liaison de type rotule 33, venue de matière avec le socle 61, est de forme semi sphérique creuse dans laquelle vient se loger le premier élément 20 de la liaison rotule 33. La liaison de type rotule 33 permet en outre l'inclinaison de la plaque à circuit imprimé 50 lorsque la molette 12 est en position activée PA, c'est-à-dire lorsque l'axe principal P est déplacé selon au moins une direction orthogonale AA à l'axe neutre N, l'axe principal P étant incliné par rapport à l'axe neutre N., permettant de le maintenir dans le boîtier 30.

Le boîtier 30, dans lequel le support 60, la plaque de maintien 16 et la plaque à circuit imprimé 50 sont agencés, comprend également deux autres oreilles de fixation 32A, 32B permettant notamment la fixation du dispositif de commande 10 dans un véhicule. Lorsque le support 60, la plaque de maintien 16 et la plaque à circuit imprimé 50 sont assemblés, le capot d'habillage 14 de la molette 12 reste accessible à l'extérieur du boîtier 30 en dépassant de la partie supérieure du boîtier 54 de sorte à être accessible par un utilisateur.

Dans d'autres modes de réalisation, la plaque à circuit imprimé 50 peut avoir une forme quelconque. Le nombre de capteurs de direction peut être réduit à au moins un capteur 24A, le capteur de direction 24A étant placé sur la plaque à circuit imprimé 50, distant de la molette 12 et sur un axe transversal quelconque suivant lequel la molette 12 peut être inclinée. Le second élément 26 de la liaison de type rotule 33 peut être fixé sur le socle 61 par collage ou soudure par vibration ou tout autre processus de fixation connu.

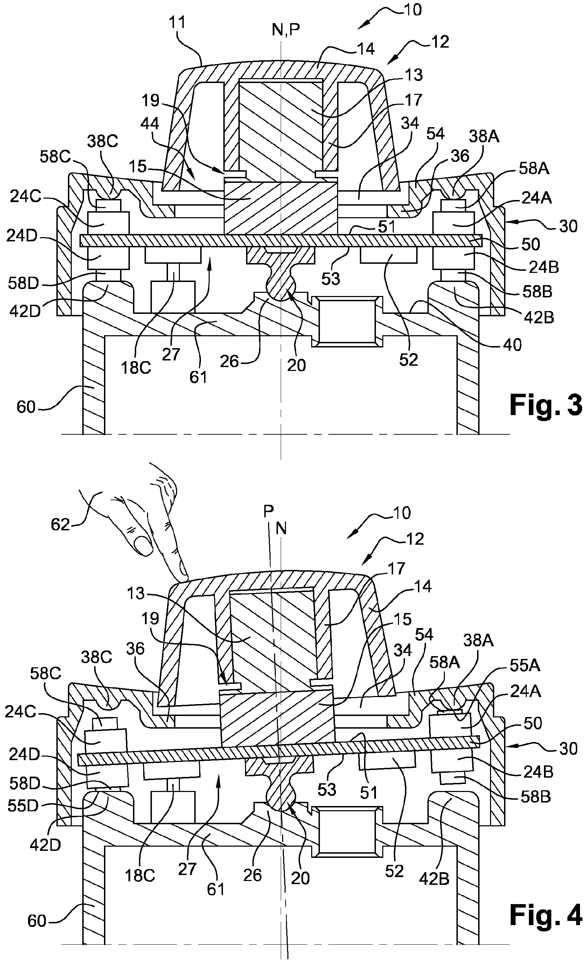

La figure 3 représente une coupe longitudinal du dispositif de commande 10 assemblé. La molette 12 est en position neutre PN. Le dispositif de commande 10 comprend le capot d'habillage 14 de la molette 12, le module de détection de position 27 de la molette 12, un support 60 de la plaque de maintien 16 et un boîtier 30 du dispositif de commande.

Le capot d'habillage 14 de la molette 12 est assemblé sur l'organe rotatif 13. L'organe rotatif 13 est de forme substantiellement cylindrique et l'encodeur rotatif 15 est également substantiellement cylindrique. L'organe rotatif 13 et l'encodeur rotatif 15 sont séparés par une rainure 19 creuse entourant transversalement la périphérie de l'organe rotatif 13. Le capot d'habillage 14 comprend une partie externe 11 de forme substantiellement cylindrique de diamètre supérieur au diamètre de l'organe rotatif 13. La partie externe 11 du capot d'habillage 14 recouvre l'organe rotatif 13 de la molette 12, cette partie externe 11 étant manipulable par l'utilisateur du dispositif de commande 10. Le capot d'habillage 14 comprend également une partie interne de forme annulaire creuse 17 s'étendant longitudinalement le long de l'organe rotatif 13 depuis la partie supérieure du capot d'habillage 14 jusqu'à la rainure 19 creuse permettant notamment de fixer le capot d'habillage 14 sur l'organe rotatif 13.

Le module de détection de position 27 comprend la plaque à circuit imprimé 50, l'encodeur rotatif 15, le premier élément 20 de la liaison du type rotule 33, quatre capteurs de directions 24A, 24B, 24C, 24D et un circuit de commande 52.

L'encodeur rotatif 15, les quatre capteurs de directions 24A, 24B, 24C, 24D, le premier élément 20 de la liaison du type rotule 33 et le circuit de commande 52 sont soudés sur la plaque à circuit imprimé 50. L'information de la position angulaire de l'encodeur rotatif 15 est transmise au circuit de commande 52 par les contacts électriques de l'encodeur rotatif 15 soudés sur la plaque à circuit imprimé 50 et en liaison avec le circuit de commande 52 par des pistes conductrices de la plaque à circuit imprimé 50.

Le circuit de commande 52 peut être de type microcontrôleur, de type circuit logique ou de type topologie électronique pouvant interpréter un signal. Le circuit de commande 52 permet de piloter des fonctions dans un véhicule.

Les quatre capteurs de direction 24A, 24B, 24C, 24D sont respectivement quatre boutons poussoir : un premier 24A, un deuxième 24B, un troisième 24C et un quatrième bouton poussoir 24D. Chaque bouton poussoir 24A, 24B, 24C, 24D comprend respectivement un élément de détection de contact dit partie poussoir : une première 58A, une deuxième 58B, une troisième 58C, et une quatrième partie poussoir 58D. Chaque bouton poussoir 24A, 24B, 24C, 24D est relié électriquement par des pistes conductrices de la plaque à circuit imprimé 50 au circuit de commande 52. Les boutons poussoir 24A, 24B, 24C, 24D sont localisés en zone distale de la plaque à circuit imprimé 50. Les boutons poussoirs 24A, 24B, 24C, 24D sont disposés par paire alignée longitudinalement sur chacune des faces de la plaque à circuit imprimé 50 de sorte que le premier bouton poussoir 24A est localisé à droite de la molette 12 sur la face supérieure 51 du circuit imprimé 50 et est aligné longitudinalement avec le deuxième bouton poussoir 24B localisé sur la face inférieure 53 du circuit imprimé 50. Le troisième bouton poussoir 24C est placé à gauche de la molette 12 sur la face supérieure 51 de la plaque à circuit imprimé 50, aligné transversalement avec le premier bouton poussoir 24A et la molette 12, le quatrième bouton poussoir 24D étant placé aligné longitudinalement avec le troisième bouton poussoir 24C et donc placé sur la face inférieure 53 de la plaque à circuit imprimé 50.

Le premier élément 20 de la liaison de type rotule 33 est agencée sur la face inférieure 53 de la plaque à circuit imprimé 50 et est alignée longitudinalement avec la molette 12. Le premier élément 20 de la liaison de type rotule 33 est orientée de sorte à pouvoir se loger dans le deuxième élément 26 de la liaison de type rotule 33 de forme semi sphérique creuse du support 60.

Le boîtier 30 du dispositif de commande 10 comprend une ouverture 44 sur sa partie supérieure 54 afin de permettre l'organe rotatif 13 de la molette 12 équipée du capot d'habillage 14, de rester accessible à l'extérieur du boîtier 30. A des fin d'étanchéité, l'ouverture 44 est comblée par une membrane 34 maintenue entre le bas de la partie externe 11 du capot d'habillage 14 et un épaulement 36 de la partie supérieure 54 du boîtier 30, l'épaulement 36 étant dirigé vers le bas. La membrane 34 est dite maintenue par pincement entre le bas de la partie externe 11 du capot d'habillage 14 et l'épaulement 36. Une première protubérance 38A et une deuxième protubérance 38C de la partie supérieure du boîtier 54, de formes semi sphériques, sont agencées en vis à vis du premier poussoir 58A et du troisième poussoir 58C placés sur la face supérieure 51 de la plaque à circuit imprimé 50. Un espace restreint de l'ordre de quelques millimètres séparent la première protubérance 38A et la deuxième protubérance 38C respectivement du premier poussoir 58A et du troisième poussoir 58C.

Le socle 61 comprend également un plot de maintien 18C venant s'introduire dans une ouverture de la plaque à circuit imprimé 50. La plaque à circuit imprimé 50 est maintenue bloquée en rotation autour de l'axe principal P par le plot 18C de maintien agencé sur le socle 61. La surface radiale 40 supérieure du socle 61 comprend une troisième protubérance 42B de forme cubique et une quatrième protubérance 42D de forme cubique, agencées en vis à vis du deuxième 58B et du quatrième poussoir 58D. Un espace restreint de l'ordre de quelques millimètres séparent la troisième protubérance 42B et la quatrième protubérance 42D respectivement du deuxième poussoir 58B et du quatrième poussoir 58D.

Dans d'autres modes de réalisation, l'encodeur rotatif 15 peut être fixée sans soudure sur la plaque à circuit imprimé 50, comme par exemple par l'insertion en force de broches additionnelles de l'encodeur rotatif 15 dans la plaque à circuit imprimé 50, telles que par exemple par pressage des broches additionnelles dans la plaque à circuit imprimé 50, ce type de broches étant dite de type press-fit.

Le contact électrique entre les contacts électriques de l'encodeur rotatif 15 et la plaque à circuit imprimé 50 peut se faire sans soudure, comme par exemple par contact en appui, l'encodeur rotatif 15 étant maintenu en appui sur la plaque à circuit imprimé 50 par l'insertion en force de broches additionnelles dans la plaque à circuit imprimé 50.

Le premier élément 20 de la liaison de type rotule 33 peut être fixée sans soudure sur la plaque à circuit imprimé 50, comme par exemple par l'insertion en force dans la plaque à circuit imprimé 50 de broches additionnelles de sa base, telles que par exemple des broches de type press-fit. Le premier élément 20 de la liaison de type rotule 33 peut faire partie de la plaque de maintien 16 de la plaque à circuit imprimé 50 tel que décrit au travers de la figure 2, le premier élément 20 de la liaison pouvant être venue de matière avec la plaque de maintien 16.

Les deux protubérances 38A, 38C de la partie supérieure du boîtier 54 et les deux autres protubérances 42B, 42D de la surface radiale 40 supérieure du support 60 peuvent être de forme géométrique quelconque. La partie supérieure du boîtier 54 et la surface radiale 40 supérieure du support 60 peuvent n'avoir aucune protubérance placée en vis-à-vis des poussoirs 58A, 58B, 58C, 58D. Dans ce cas, les poussoirs 58A, 58B, 58C, 58D sont placés en vis-à-vis des surfaces de chacun des éléments de maintien du dispositif de commande 10, à savoir la surface interne de la partie supérieure du boîtier 54 et de la surface radiale 40 supérieure du support 60. Le nombre de protubérances peut être également réduit à au moins une protubérance par surface placée en vis-à-vis des poussoirs 58A, 58B, comme par exemple une protubérance de type circulaire couvrant les poussoirs 58A, 58B des boutons poussoir 24A, 24B, placés sur une même face de la plaque à circuit imprimé 50.

La membrane 34 peut être fixée par vibration ou autre processus de soudure sur l'épaulement 36 de la partie supérieur 54 du boîtier 30.

La figure 4 représente le dispositif de commande 10 lorsque la molette 12 est en position activée PA, plus précisément lorsque la molette 12, sollicitée par la main de l'utilisateur 62, est en déplacement transversal gauche. Dans un but de clarté, on se limitera à une explication du fonctionnement du dispositif de commande 10 pour un déplacement de la molette 12 suivant le deuxième axe transversal T dit déplacement droite-gauche DG. Il est bien entendu que le fonctionnement décrit pour le déplacement droite-gauche DG peut s'étendre à n'importe quel autre déplacement selon n'importe quel axe transversal.

La figure 4 illustre les mêmes éléments et les mêmes numéros de référence que la figure 3. Dans ce mode de réalisation où la molette 12 est inclinée sur la gauche, l'axe principal P est déplacé selon une direction orthogonale DG à gauche de l'axe neutre N, l'axe principal P étant incliné par rapport à l'axe neutre N. La molette 12, la plaque à circuit imprimé 50 et le premier élément 20 de la liaison de type rotule 33 sont inclinées. L'ensemble de ces élément du dispositif 10 sont solidaires les uns des autres. Le premier élément 20 de la liaison de type rotule 33 pivote dans le second élément 26 de la liaison de type rotule 33 de forme semi sphérique creuse dans laquelle il est logé. L'inclinaison vers la gauche de la molette 12 et donc du premier élément 20 de la liaison de type rotule 33 entraine une inclinaison de la plaque à circuit imprimée 50 placée substantiellement orthogonal à l'axe principal P. L'inclinaison de la plaque à circuit imprimé 50 entraine le premier poussoir 58A en butée avec une première surface d'appui 55A de la première protubérance 38A de la partie supérieure du boîtier 54. De même et substantiellement au même instant, l'inclinaison de la plaque à circuit imprimé 50 entraine le quatrième poussoir 58D en butée avec une quatrième surface d'appui 55D de la quatrième protubérance 42D. La butée du premier et du quatrième poussoir 58A, 58D, entraine leur enfoncement de sorte que le premier et le quatrième boutons poussoirs 24A, 24D s'activent.

L'activation du premier et du quatrième boutons poussoir 24A, 24D permet au circuit de commande 52 d'identifier correctement une inclinaison de la molette 12 vers la gauche. Pour la détection d'une inclinaison de la molette 12 vers la droite, un fonctionnement similaire s'opère avec le deuxième et le troisième poussoir 58B, 58C lors de leur butée sur la deuxième et la troisième protubérance 42B, 38C.

Lorsque la main de l'utilisateur 62 ne sollicite plus la molette 12 en position activée PA, le retour de la molette 12 en position neutre PN est provoqué par la force de retour des poussoirs 58A, 58B enfoncés. Les boutons poussoirs 24A, 24B sont normalement conçus de sorte que leur poussoir 58A, 58B reviennent en position initiale après un appui via un élément de rappel élastique tel qu'un ressort.

A titre d'exemple, le premier poussoir 58A enfoncé sur la première surface d'appui 55A de la première protubérance 38A va exercer une force élastique s'opposant à son appui, de sorte que lorsque la main de l'utilisateur 62 ne contraint plus la molette 12 en position activée PA, la force élastique s'opposant à l'appui du poussoir 58A sur la première surface d'appui 55A de la première protubérance 38A va éloigner le bouton poussoir 24A entrainant avec lui la plaque à circuit imprimé 50 et la molette 12. La molette 12 va retourner dans sa position neutre PN substantiellement orthogonale à l'axe neutre N.

Bien qu'il soit à noter que l'enfoncement de plusieurs poussoirs présente l'avantage de sécuriser la détection de l'inclinaison de la molette 12 et aussi de produire une force élastique plus importante sollicitant la molette 12 vers sa position neutre PN depuis la position activée PA associée, dans d'autres modes de réalisation, l'enfoncement d'un seul poussoir 58A peut être suffisant pour identifier l'inclinaison de la molette 12. Le retour en position neutre PN de la molette 12, lorsque la main de l'utilisateur 62 ne sollicite plus son inclinaison, peut être facilité par la membrane 34 ayant des propriétés souple et élastique. Lorsque la membrane 34 est compressée entre l'habillage 14 de la molette 12 et l'épaulement 36 du boîtier lors de l'inclinaison de la molette 12, la membrane 34 souple et substantiellement élastique va exercer une force s'opposant à sa compression et sollicitant la molette 12 vers sa position neutre PN depuis la position activée PA associée.

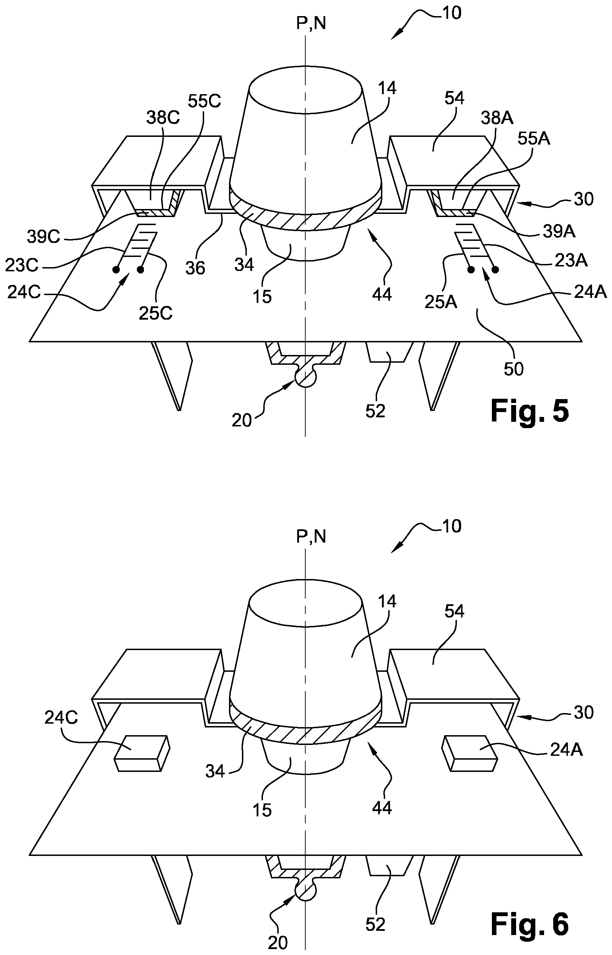

La figure 5 est une vue ouverte du dispositif de commande 10 illustrant une alternative aux capteurs de direction 24A, 24C de l'invention. Le reste de l'agencement du dispositif de commande 10 reste similaire aux descriptions illustrées par les figures précédentes. L'ouverture 44 sur la partie supérieure 54 du boîtier 30 du dispositif de commande 10 permet à l'organe rotatif 13 de la molette 12 équipée du capot d'habillage 14 de rester accessible à l'extérieur du boîtier 30, l'encodeur rotatif 15 de la molette 12 étant fixé sur la plaque à circuit imprimé 50. L'ouverture 44 de la partie supérieure du boîtier 30 est comblée par la membrane 34 souple et élastique. La membrane 34 est maintenue pincée entre le bas de la partie externe 11 du capot d'habillage 14 et l'épaulement 36 de la partie supérieure 54 du boîtier 30.

Le premier capteur de direction 24A et le deuxième capteur de direction 24C sont des alternatives aux poussoirs 58A, 58C des boutons poussoirs 24A, 24C illustrés par la figure 3 et la figure 4. Le mode de réalisation illustré par la figure 5 est basé sur des capteurs de direction 24A de type résistif. Le premier capteur de direction 24A et le deuxième capteur de direction 24C sont respectivement deux premières pistes conductrices 23A, 25A et deux deuxièmes pistes conductrices 23C, 25C agencées dans une topologie de peignes entrelacés disposés sur la plaque à circuit imprimé 50. La topologie dite de peignes entrelacés permet aux deux pistes conductrices 23A, 25A d'être proches et non en contact électrique l'une de l'autre.

D'autres topologies peuvent-être envisagées comme par exemple une topologie dite de cercles concentriques. Les pistes conductrices 23A, 25A, 23 C, 25C peuvent être par exemple des pistes de cuivres.

Une des deux premières pistes conductrices 23A est reliée à un potentiel électrique, l'autre première piste conductrice 25A est reliée au circuit de commande 52. Egalement, une des deux deuxième pistes conductrices 23C est reliée à un potentiel électrique fixe, l'autre première piste conductrice 25C est reliée au circuit de commande 52. Les deux premières pistes conductrices 23A, 25A et les deux deuxièmes pistes conductrices 23C, 25C sont agencées en vis-à-vis de la première surface d'appui 55A de la première protubérance 38A et de la deuxième surface d'appui 55C de la deuxième protubérance 38C de la partie supérieure du boîtier 54. Les surfaces d'appuis 55A, 55C de la première protubérance 38A et la deuxième protubérance 38C sont équipées respectivement d'un premier élément conducteur 39A et d'un deuxième élément conducteur 39C. Les éléments conducteurs 39A, 39C peuvent-être des pastilles de cuivre, de carbone ou tout autre matériau électriquement conducteur.

Lorsque la molette 12 est en position activée PA, plus précisément lorsque la molette 12, sollicitée par la main de l'utilisateur 62, est en déplacement transversal gauche ou en déplacement transversal droit, un des éléments conducteurs 39A vient établir un contact électrique entre les deux pistes conductrices 23A, 23C de la topologie dite en peigne entrelacé. Le potentiel électrique d'une des deux pistes conductrices 23A est alors en contact avec le circuit de commande 52. Le circuit de commande 52 identifie donc l'inclinaison de la molette 12.

Dans d'autres modes de réalisation, le principe de capteur de direction par des capteurs résistifs peut être appliqué à des capteurs de type capacitif. Dans ce cas, le contact entre les pistes conductrices 23A, 23C et les protubérances 38A, 38C entraine une modification de la capacité électrique des pistes conductrices 23A, 23C détectée par le circuit de commande 52. Plus généralement, tout type d'interrupteur pouvant s'actionner par contact en d'appui sur une surface d'appui permettent la réalisation de l'invention.

Le retour en position neutre PN de la molette, lorsque la main de l'utilisateur 62 ne sollicite plus son inclinaison, est effectué par la membrane 34 ayant des propriétés souple et élastique. Lorsque la membrane 34 est compressée entre le capot d'habillage 14 de la molette 12 et l'épaulement 36 du boîtier lors de l'inclinaison de la molette 12, la membrane 34 souple et élastique va exercer une force s'opposant à sa compression permettant ainsi à la mollette 12 de retrouver sa position neutre PN initiale et donc d'ouvrir le contact électrique entre les deux pistes conductrices 23A, 23C de la topologie dite en peigne entrelacé.

La figure 6 est une vue ouverte du dispositif de commande 10 illustrant une autre alternative aux capteurs de direction 24A, 24C de l'invention. Le reste de l'agencement du dispositif de commande 10 reste similaire aux descriptions illustrées par les figures précédentes. L'ouverture 44 sur la partie supérieure 54 du boîtier 30 du dispositif de commande 10 permet à l'organe rotatif 13 de la molette 12 équipée du capot d'habillage 14, de rester accessible à l'extérieur du boîtier 30, l'encodeur rotatif 15 de la molette 12 étant fixé sur la plaque à circuit imprimé 50. L'ouverture 44 de la partie supérieure du boîtier 30 est comblée par la membrane 34 souple et élastique. La membrane 34 est maintenue pincée entre le bas de la partie externe 11 du capot d'habillage 14 et l'épaulement 36 de la partie supérieure 54 du boîtier 30.

Dans ce mode de réalisation, le premier capteur de direction 24A et le deuxième capteur de direction 24C sont des capteurs d'inclinaisons pouvant par exemple être de type à gyroscope, de type inclinomètre, de type accéléromètre ou toute autre technologie permettant de détecter une inclinaison suivant une référence. Le premier et le deuxième capteur de direction 24A, 24C sont soudés sur le circuit imprimé et sont reliés électriquement au circuit de commande 52. Le circuit de commande 52 identifie donc l'inclinaison de la molette 12.

## Revendications

1. Dispositif de commande (10) destiné au choix et à la sélection de fonctions dans un véhicule par un utilisateur (62), le dispositif (10) comprenant une molette (12) manipulable en rotation (RP) autour d'un axe principal (P) par rapport à un support (60) fixe; la molette (12) comprenant une position neutre (PN) dans laquelle l'axe principal (P) est confondu avec un axe neutre (N) fixe par rapport au support (60), le dispositif de commande (10) comprend également une plaque à circuit imprimé (50) sur laquelle la molette (12) et au moins un capteur de direction (24A) sont fixés, la plaque à circuit imprimé (50) étant montée pivotante par rapport au support (60) autour d'un axe (T) globalement transversal à l'axe neutre (N) de manière à venir occuper plusieurs positions activées (PA) dans laquelle l'axe principal (P) est incliné par rapport à l'axe neutre (N) lorsque la molette (12) est déplacée selon plusieurs directions orthogonales à l'axe neutre (N), la plaque à circuit imprimé (50) comportant plusieurs capteurs de direction (24A) qui sont agencés autour de l'axe principal (P) de manière à permettre la détection des positions activées (PA) distinctes autour de l'axe neutre (N), la plaque à circuit imprimé (50) étant agencé dans un boîtier (30) dont une paroi interne forme la surface d'appui (54) du dispositif (10), le boîtier (30) comprenant:
une ouverture (44) traversée par la molette (12) fixée sur la plaque du circuit imprimé (50), et **caractérisé en ce que**
une membrane souple comblant la dite ouverture (44) ;
la molette (12) comprenant un capot d'habillage (14) venant en appui sur la membrane (34), ladite membrane ayant des propriétés élastiques sollicitant la molette (12) vers sa position neutre (PN) depuis la position activée (PA) associée

2. Dispositif de commande (10) selon la revendication précédente, **caractérisé en ce qu'**il est prévu au moins un capteur de direction (24A) sur chaque face de la plaque à circuit imprimé (50).

3. Dispositif de commande (10) selon la revendication précédente, **caractérisé en ce que** le premier capteur de direction (24A) comporte un élément de détection de contact (58A) coopérant avec une surface d'appui (55A) du dispositif de commande (10) placé en vis-à-vis du capteur (24A), le capteur (24A) s'actionnant lors de la butée dudit élément de détection de contact (58A) avec la surface d'appui (55A) du dispositif de commande (10) lors du pivotement de la molette (12) en position activée (PA).

4. Dispositif de commande (10) selon la revendication 3, **caractérisé en ce qu'**au moins un capteur de direction (24A) comporte un élément de rappel élastique (58A) qui sollicite la molette (12) vers sa position neutre (PN) depuis la position activée (PA) associée.

5. Dispositif de commande (10) selon l'une quelconque des revendications précédentes, **caractérisé en ce que** la plaque à circuit imprimé (50) est montée pivotante par une liaison de type rotule (33) qui est agencée entre la plaque à circuit imprimé (50) et le support (60).

6. Dispositif de commande (10) selon la revendication précédente, **caractérisé en ce que** la liaison du type rotule (33) comporte un premier élément de liaison (20) qui est fixé sur la plaque à circuit imprimé (50) et un second élément de liaison (26) qui est fixé sur le support (60).

7. Dispositif de commande (10) selon la revendication précédente prise en combinaison avec la revendication 3, **caractérisé en ce que** le support (60) comporte un socle (61), le socle (61) comportant :
une protubérance (42B) sur sa face supérieure (40) formant une surface d'appui (55) associée à au moins un capteur de direction (24C), et
le second élément de liaison (26) réalisé venu de matière avec la face supérieure (40) du socle (61).

## Patentansprüche

1. Steuervorrichtung (10) zur Auswahl und Selektion von Funktionen in einem Fahrzeug durch einen Benutzer (62), wobei die Vorrichtung (10) einen Drehknopf (12) enthält, der bezüglich eines festen Trägers (60) um eine Hauptachse (P) drehend (RP) betätigbar ist; wobei der Drehknopf (12) eine neutrale Position (PN) aufweist, in welcher die Hauptachse (P) mit einer bezüglich des Trägers (60) festen, neutralen Achse (N) zusammenfällt,
wobei die Steuervorrichtung (10) ferner eine Leiterplatte (50) enthält, an welcher der Drehknopf (12) und zumindest ein Richtungssensor (24A) befestigt sind, wobei die Leiterplatte (50) bezüglich des Trägers (60) um eine quer zur neutralen Achse (N) verlaufende Achse (T) verschwenkbar gelagert ist, so dass sie mehrere aktivierte Positionen (PA) einnimmt, wobei die Hauptachse (P) bezüglich der neutralen Achse (N) dann geneigt ist, wenn der Drehknopf (12) in mehreren orthogonal zur neutralen Achse (N) verlaufenden Richtungen verlagert wird, wobei die Leiterplatte (50) mehrere Richtungssensoren (24A) enthält, die um die Hauptachse (P) herum so angeordnet sind, dass sie das Erfassen der verschiedenen aktivierten Positionen (PA) um die neutrale Achse (N) herum gestatten, wobei die Leiterplatte (50) in einem Gehäuse (30) angeordnet ist, dessen Innenwand die Auflagefläche (54) der Vorrichtung (10) bildet, wobei das Gehäuse (30) enthält:
eine Öffnung (44), durch die sich der an die Leiterplatte (50) befestigte Drehknopf (12) erstreckt,
**dadurch gekennzeichnet, dass**
eine nachgiebige Membran die Öffnung (44) verschließt;
der Drehknopf (12) eine Abdeckkappe (14) enthält, die in Anlage an die Membran (34) gelangt, wobei die Membran elastische Eigenschaften hat, wodurch der Drehknopf (12) von der zugeordneten aktivierten Position (PA) in seine neutrale Position (PN) beaufschlagt wird.

2. Steuervorrichtung (10) nach dem vorangehenden Anspruch,
**dadurch gekennzeichnet, dass**
auf jeder Seite der Leiterplatte (50) zumindest ein Richtungssensor (24A) vorgesehen ist.

3. Steuervorrichtung (10) nach dem vorangehenden Anspruch,
**dadurch gekennzeichnet, dass**
der erste Richtungssensor (24A) ein Kontakterfassungselement (58A) enthält, das mit einer Auflagefläche (55A) der Steuervorrichtung (10) zusammenwirkt und dem Sensor (24A) gegenüberliegend angeordnet ist, wobei der Sensor (24A) bei Anschlagen des Kontakterfassungselements (58A) an die Auflagefläche (55A) der Steuervorrichtung (10) beim Verschwenken des Drehknopfs (12) in die aktivierte Position (PA) betätigt wird.

4. Steuervorrichtung (10) nach Anspruch 3,
**dadurch gekennzeichnet, dass**
zumindest ein Richtungssensor (24A) ein elastisches Rückstellelement (58A) enthält, welches den Drehknopf (12) von der zugeordneten aktivierten Position (PA) in seine neutrale Position (PN) beaufschlagt.

5. Steuervorrichtung (10) nach einem der vorangehenden Ansprüche,
**dadurch gekennzeichnet, dass**
die Leiterplatte (50) über eine kugelgelenkartige Verbindung (33) verschwenkbar gelagert ist, die zwischen der Leiterplatte (50) und dem Träger (60) angeordnet ist.

6. Steuervorrichtung (10) nach dem vorangehenden Anspruch,
**dadurch gekennzeichnet, dass**
die kugelgelenkartige Verbindung (33) ein erstes Verbindungselement (20) enthält, das an die Leiterplatte (50) befestigt ist, sowie ein zweites Verbindungselement (26), das an den Träger (60) befestigt ist.

7. Steuervorrichtung (10) nach dem vorangehenden Anspruch in Kombination mit Anspruch 3,
**dadurch gekennzeichnet, dass**
der Träger (60) einen Sockel (61) enthält, wobei der Sockel (61) enthält: einen Vorsprung (42B) an seiner Oberseite (40), der eine Auflagefläche (55) bildet, die zumindest einem Richtungssensor (24C) zugeordnet ist, und das zweite Verbindungselement (26), das stoffschlüssig mit der Oberseite (40) des Sockels (61) ausgebildet ist.

## Claims

1. Control device (10) intended for a user (62) to choose and select functions in a vehicle, the device (10) comprising a knob (12) that can be manipulated in rotation (RP) about a main axis (P) with respect to a fixed support (60); the knob (12) comprising a neutral position (PN) in which the main axis (P) coincides with a neutral axis (N) that is fixed with respect to the support (60),
the control device (10) also comprises a printed circuit board (50) on which the knob (12) and at least one direction sensor (24A) are secured, the printed circuit board (50) being pivotally mounted relative to the support (60) about an axis (T) generally transverse to the neutral axis (N) so as to occupy several activated positions (PA) wherein the main axis (P) is inclined with respect to the neutral axis (N) when the knob (12) is displaced in several directions orthogonal to the neutral axis (N), the printed circuit board (50) having several direction sensors (24A) which are arranged about the main axis (P) so as to allow the detection of separate activated positions (PA) about the neutral axis (N), the printed circuit board (50) being arranged in a housing (30), the inner wall of which forms the bearing surface (54) of the device (10), the housing (30) comprising:
an opening (44) through which the knob (12), secured to the printed circuit board (50), passes, and **characterized in that**
a flexible membrane filling said opening (44);
the knob (12) comprising a cap (14) bearing on the membrane (34), said membrane having elastic properties biasing the knob (12) toward its neutral position (PN) from the associated activated position (PA)

2. Control device (10) according to the preceding claim, **characterized in that** at least one sensor of management (24A) is proved on each side of the printed circuit board (50).

3. Control device (10) according to the preceding claim, **characterized in that** the first direction sensor (24A) comprises a contact detection element (58A) cooperating with a bearing surface (55A) of the control device (10) placed opposite the sensor (24A), the sensor (24A) operating upon abutment of said contact detecting element (58A) with the bearing surface (55A) of the control device (10) when the knob pivots (12) in the activated position (PA).

4. Control device (10) according to claim 3, **characterized in that** at least one direction sensor (24A) includes an elastic return element (58A) that biases the knob (12) toward its neutral position (PN) from the associated activated position (PA).

5. Control device (10) according to any one of the preceding claims, **characterized in that** the printed circuit board (50) is pivotally mounted by a ball joint type connection (33) which is arranged between the printed circuit board (50) and the support (60).

6. Control device (10) according to the preceding claim, **characterized in that** the ball joint type connection (33) includes a first connecting element (20) which is secured to the printed circuit board (50) and a second connecting element (26) which is secured to the support (60).

7. Control device (10) according to the preceding claim taken in conjunction with Claim 3, **characterized in that** the support (60) includes a base (61), the base (61) including:
a protrusion (42B) on its upper face (40) forming a bearing surface (55) associated with at least one direction sensor (24C), and
the second connecting element (26) formed integrally with the upper face (40) of the base (61).
